# FASCICULE DE BREVET EUROPEEN

(11) **EP 0 491 616 B1**
(45) Date de publication et mention de la délivrance du brevet: **09.11.1994**
(21) Numéro de dépôt: 91403417.8
(22) Date de dépôt: 17.12.1991
(51) Int. Cl.: H01R 4/72

(54) **Manchon thermorétractable à contrôle de rétraction**
Wärmeschrumpfhülse mit Schrumpfungskontrolle
Heat shrinking sleeve with shrinking control

(30) Priorité: 18.12.1990 FR 9015825
(43) Date de publication de la demande: 24.06.1992
(73) Titulaire: SOCIETE INDUSTRIELLE DE LIAISONS ELECTRIQUES - SILEC, F-75008 Paris (FR)
(72) Inventeur: Arette Hourquet, Damien, F-77130 Cannes Ecluse (FR)
(74) Mandataire: Fruchard, Guy

(56) Documents cités:
- EP-A- 0 120 475
- WO-A-90/07202

## Description

La présente invention concerne un manchon thermorétractable à contrôle de rétraction.

On connaît des manchons thermorétractables servant à isoler, protéger ou recouvrir des objets de formes variables, ces manchons étant stables à la température ambiante et se rétractant lorsqu'ils sont chauffés.

On connaît en particulier des manchons thermorétractables multicouches constitués d'une enveloppe extérieure en matériau expansé à température ambiante et de une ou plusieurs autres couches intérieures thermorétractables ou non dont les propriétés varient selon les applications : couche conductrice de l'électricité, couche isolante, couche à haute permittivité, couche adhésive, etc..

Une rétraction complète et homogène d'un tel manchon n'est pas aisément obtenue notamment lorsque le produit thermorétractable n'est pas accessible sur toute la surface par le moyen de chauffage.

On sait effectuer un contrôle de rétraction d'un manchon rétractable en déposant une marque de couleur sur la surface externe de la pièce à rétracter, cette marque changeant de couleur lorsque le chauffage est suffisant et laissant donc supposer une rétraction complète. En fait, ce procédé ne garantit pas la rétraction totale et homogène car les conditions de mise en oeuvre varient en fonction de plusieurs paramètres dont les principaux sont : les caractéristiques du chalumeau utilisé par le manipulateur, le réglage du chalumeau, c'est-à-dire la température de la flamme, le temps d'application de la flamme au même endroit, la température ambiante. L'expérience montre que des gaines thermorétractables ne sont pas toujours rétractées sur la pièce à recouvrir alors que les marques ont viré de couleur. On a certes pensé à disposer ces marques de couleur à l'intérieur du manchon afin de s'assurer que le changement de couleur est effectivement associé à une élévation de température dans toute l'épaisseur de la paroi du manchon. Toutefois, de nombreux matériaux thermorétractables sont opaques de sorte qu'il n'est pas possible de voir les marques disposées à l'intérieur du manchon.

Un but de l'invention est de proposer un nouveau manchon thermorétractable à contrôle de rétraction.

En vue de la réalisation de ce but, on propose selon l'invention un manchon thermorétractable qui, dans un état expansé, comporte des circonvolutions sur une partie au moins de sa surface externe. Ainsi, lorsque le manchon est rétracté sous l'effet de la chaleur, le matériau thermorétractable se tend sur l'objet à recouvrir et les circonvolutions disparaissent, un reste de circonvolutions en un point quelconque du manchon étant généralement signe d'une mauvaise rétraction à cet endroit.

Selon une version avantageuse de l'invention, le manchon thermorétractable a une paroi d'épaisseur sensiblement constante et les circonvolutions correspondent à des déformations de la paroi. Ainsi on s'assure que le manchon est totalement rétracté lorsque sa paroi ne présente plus d'autres déformations que celles résultant de l'objet recouvert.

D'autres caractéristiques et avantages de l'invention ressortiront à la lecture de la description qui suit d'un mode de réalisation particulier non limitatif de l'invention en liaison avec les dessins ci-joints parmi lesquels :
- la figure 1 est une vue en perspective partielle, partiellement en coupe, d'un mode de réalisation du manchon selon l'invention dans un état expansé,
- la figure 2 est une vue en perspective partiellement en coupe, d'un dispositif servant à la réalisation du manchon selon l'invention,

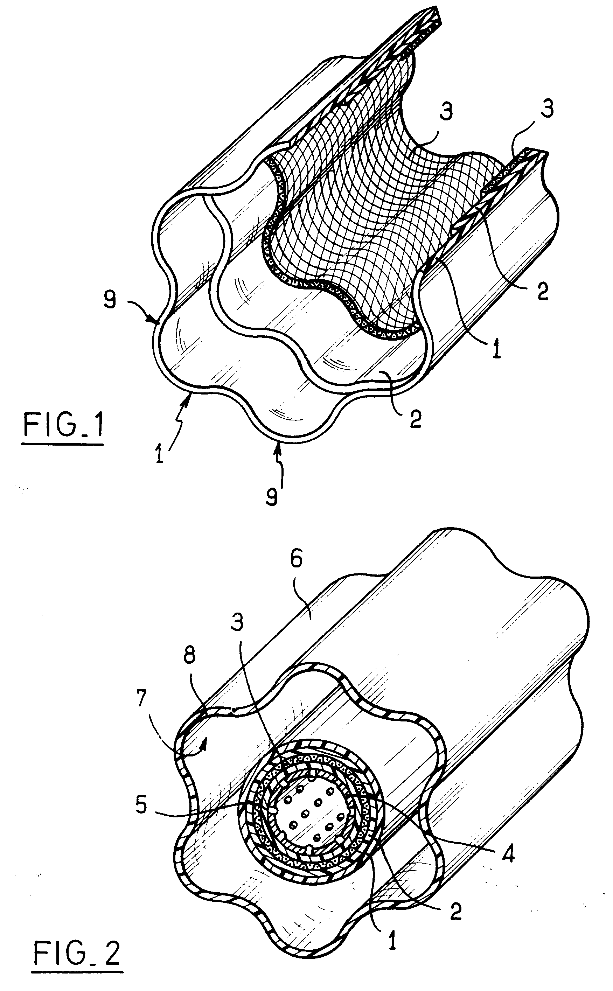

En référence aux figures, le manchon selon l'invention est par exemple un manchon multicouches comportant une couche de matériau thermorétractable 1, qui, dans un état non expansé représenté sur la figure 2, a une forme généralement cylindrique. A l'intérieur de la couche de matériau thermorétractable, le manchon comporte une couche de colle ou de mastic 2 dont le bord est en retrait par rapport au bord du manchon en matière thermoplastique. A l'intérieur de la couche de colle ou de mastic, le manchon comporte une couche la plus interne formée d'une nappe de fils métalliques 3 fixée à la couche immédiatement adjacente. La nappe de fils métalliques 3 est par exemple réalisée par un tricot métallique tubulaire ou une nappe métallique tissée ou non tissée. Dans le cas d'une nappe métallique tissée, celle-ci est réalisée avec au moins une des nappes de fils s'étendant en diagonale par rapport à l'axe longitudinal du manchon thermorétractable de façon à pouvoir se rétracter sans former de pli lors de la rétraction du manchon thermorétractable 1.

Dans l'exemple de réalisation illustré, la nappe métallique 3 a un bord en retrait par rapport au bord de la couche de colle 2 de sorte que a couche de colle ou de mastic 2 a un bord s'étendant entre le bord de la nappe de fils métalliques et le bord du manchon thermorétractable comme représenté sur la figure 1.

En pratique, on peut réaliser le manchon thermorétractable selon l'invention à partir d'un tube perforé cylindrique 4 recouvert d'une couche de matériau souple, élastique, antiadhésif 5 sur laquelle on dispose la nappe de fils métalliques déformable 3 enduite de colle ou recouverte de mastic pour former la couche de colle ou de mastic 2 sur laquelle on extrude la couche de matériau à propriété thermorétractable 1. L'ensemble des couches est soumis à une opération de réticulation ou toute opération donnant au matériau une structure thermorétractable, seuls le ou les produits réticulables étant modifiés. L'ensemble est ensuite expansé à chaud, soit immédiatement après réticulation, soit après réchauffage, par mise en pression du tube perforé 4 jusqu'à ce que le manchon thermorétractable 1 soit en contact avec la surface interne 7 de l'organe de formage 6. L'ensemble est refroidi à l'état expansé et le tube 4 est mis hors pression de sorte que la couche de matériau souple, élastique, anti-adhésif 5 revient à sa position initiale et le manchon thermorétractable dans l'état expansé tel qu'illustré à la figure 1 est sorti de l'organe de formage 6. Sous l'effet de la pression, l'ensemble des couches a adopté la forme des circonvolutions 8 de la surface interne de l'organe de formage 6 de sorte qu'à l'état expansé le manchon thermorétractable 1 comporte les circonvolutions 9 qui résultent des déformations de sa paroi et apparaîssent à sa surface externe.

La mise en oeuvre du manchon thermorétractable selon l'invention est semblable à celle des gaines thermorétractables habituelles c'est à dire qu'après avoir choisi un manchon adapté aux dimensions de l'objet à protéger, sachant que le rapport de rétraction est généralement de l'ordre de 2 à 1, le manchon est mis en place et est chauffé au moyen d'un chalumeau à flamme peu chaude ou d'un chalumeau à air chaud. La rétraction est complète lorsque les déformations externes ont complètement disparu. A ce propos on remarquera que la présence de la couche métallique, bonne conductrice de la chaleur, assure une excellente répartition de la chaleur au moment de la rétraction et donc une grande homogénéité de celle-ci.

Dans le cas d'un raccordement de câbles, la couche métallique est de préférence disposée pour venir en contact avec l'écran métallique des câbles de part et d'autre de la jonction afin d'assurer une continuité électrique entre les écrans de câbles des deux câbles réunis. On remarquera que la nappe de fils métalliques est susceptible de transporter des courants électriques importants tels que des courants de terre ou des courants capacitifs, ou même des courants de phases ou des courants de court-circuits.

Bien entendu l'invention n'est pas limitée au mode de réalisation décrit et on peut y apporter des variantes de réalisation. En particulier, bien que dans le mode de réalisation illustré, la surface externe du manchon comporte des circonvolutions sinusoîdales régulièrement réparties tout autour du manchon, on peut prévoir des circonvolutions plus localisées.

Par ailleurs, les circonvolutions peuvent être réalisées en continu sur un tube en faisant par exemple passer le tube entre des galets au moment où le tube est refroidi dans son état expansé.

## Revendications

1. Manchon thermorétractable (1) caractérisé en ce que dans un état expansé il comporte des circonvolutions (9) sur une partie au moins de sa surface externe.

2. Manchon thermorétractable selon la revendication 1 caractérisé en ce que le manchon a une paroi d'épaisseur sensiblement constante et les circonvolutions (9) correspondent à des déformations de la paroi.

## Patentansprüche

1. Wärmeschrumpfhülse (1), dadurch gekennzeichnet, daß diese in einem expandierten Zustand in einem Bereich zumindest ihrer Außenfläche Längsfalten (9) hat.

2. Wärmeschrumpfhülse nach Anspruch 1, dadurch gekennzeichnet, daß die Hülse eine Wand mit im wesentlichen konstanter Dicke hat und daß die Längsfalten (9) Verformungen der Wand entsprechen.

## Claims

1. A heat-shrinkable sleeve (1) characterised in that in an expanded state it comprises circumvolutions (9) over a part at least of its outside surface.

2. A heat-shrinkable sleeve according to Claim 1 characterised in that the sleeve has a wall of substantially constant thickness and the circumvolutions (9) correspond to deformations of the wall.
